# EUROPÄISCHE PATENTSCHRIFT

(11) **EP 1 548 415 B1**
(45) Veröffentlichungstag und Bekanntmachung des Hinweises auf die Patenterteilung: **30.01.2008**
(21) Anmeldenummer: 04025932.7
(22) Anmeldetag: 02.11.2004
(51) Int. Cl.: G01K 1/12, G01K 13/12

(54) **Trägerrohr für Sensoren zur Messung in Schmelzen wie Metallschmelzen oder dergleiche**
Sleeve for sensor for measurements in liquid such as liquid metals
Support enveloppant un capteur pour mesure dans un bain tel qu'un bain de métal liquide

(30) Priorität: 17.12.2003 DE 10359449
(43) Veröffentlichungstag der Anmeldung: 29.06.2005
(73) Patentinhaber: Heraeus Electro-Nite International N.V., 3530 Houthalen (BE)
(72) Erfinder: Plessers, Jacques, 3530 Houthalen (BE)
(74) Vertreter: Kühn, Hans-Christian

(56) Entgegenhaltungen:
- DE-B- 1 274 379
- FR-A- 2 181 933
- GB-A- 1 488 052
- GB-A- 1 492 268
- US-A- 4 662 614
- US-A- 4 692 556
- US-A- 5 435 196
- US-A- 5 709 474
- US-B1- 6 227 702
- PATENT ABSTRACTS OF JAPAN Bd. 0123, Nr. 13 (P-749), 25. August 1988 (1988-08-25) & JP 63 081264 A (JAPAN VILENE CO LTD), 12. April 1988 (1988-04-12)
- PATENT ABSTRACTS OF JAPAN Bd. 0132, Nr. 31 (P-878), 29. Mai 1989 (1989-05-29) & JP 1 041824 A (NISSHIN STEEL CO LTD), 14. Februar 1989 (1989-02-14)
- SAMSONOW E A: "nichtmetallene THERMOPAARE UND SCHUTZROHRE" VDI Z, VDI VERLAG GMBH. DUSSELDORF, DE, Bd. 111, Nr. 24, Oktober 1969 (1969-10), Seiten 1337-1342, XP002077215 ISSN: 0042-1766

## Beschreibung

Die Erfindung betrifft ein Trägerrohr für Sensoren zur Messung in Metall- oder Kryolithschmelzen, insbesondere in Gusseisen-, Stahl- oder Kupferschmelzen.

Aus dem Deutschen Gebrauchsmuster DE 7507605 U1 ist eine Isolierhülse für Messlanzen bekannt, die aus einem gepressten Gemisch aus Cellulose und einem Bindemittel gebildet ist. Das Cellulosematerial besteht im wesentlichen aus Holzfasern oder Holzspänen.

Gegenstände, die aus Holzfasern gepresst oder extrudiert sind, sind hinlänglich bekannt und werden im täglichen Leben als Platten in Gebäuden, als Türblätter, Strukturelemente, Isolierungen oder auch als Verpackungsmaterial und für eine Reihe anderer Anwendungen eingesetzt. Derartige Platten und Profilteile sind beispielsweise aus WO 90/14935 A1 oder aus WO 95/04111 A1 bekannt.

In der Prozessmesstechnik in metallurgischen Werken werden Messsonden in einer großen Anzahl regelmäßig benötigt, um die Qualität der Metallschmelzen laufend zu überprüfen. Dazu werden überwiegend Sensoren eingesetzt, die in die Hochtemperaturschmelze eingetaucht werden. Diese Sensoren sind nach einer Messung verbraucht und werden für die nächste Messung durch neue Sensoren ersetzt. Die Sensoren werden üblicherweise an Rohren aus Pappe gehalten. Diese Rohre verbrennen zumindest teilweise und sind nach der Messung unbrauchbar.

Es besteht der Bedarf nach preiswerten Trägern für Sensoren in aggressiven Hochtemperaturschmelzen, die einerseits eine ausreichende Haltbarkeit aufweisen, um die gewünschte Messung zu ermöglichen und die andererseits umweltfreundlich entsorgt werden können.

Erfindungsgemäß wird die Aufgabe dadurch gelöst, dass das eingangs charakterisierte Trägerrohr aus einer Mischung eines pflanzlichen Fasermaterials mit Stärke und/oder Protein gebildet ist. Es wird gepresst oder extrudiert. Ein derartiges Trägerrohr besteht aus natürlichem oder naturnahen Material und ist daher umweltfreundlich zu entsorgen. Erstaunlicherweise hat es sich auch als ausreichend temperaturstabil erwiesen um den hohen Temperaturen von bis zu 1.700°C zumindest während der Entnahme der Messwerte derart Stand zu halten, dass eine Messung und die Weiterleitung der Messsignale erfolgen kann.

Vorzugsweise ist das pflanzliche Fasermaterial auf Holz- und/oder Cellulosebasis gebildet. Insbesondere ist es vorteilhaft, dass das Holz als Späne oder Holzmehl vorliegt. Es kann zweckmäßig sein, dass das Trägerrohr zusätzlich Kunststoff und/oder ein Gleitmittel enthält. Der Kunststoff kann vorzugsweise Polypropylen, Polyvenylchlorid, Polyethylen oder ähnliches sein. Auch recycelter Kunststoff kann verwendet werden. Es dient der Verbesserung der mechanischen Eigenschaften, insbesondere der Erhöhung der Bruchfestigkeit, so dass das Trägerrohr insbesondere beim Gebrauch vor dem Eintauchen in die Schmelze möglichst nicht beschädigt wird.

Der Anteil des Fasermaterials beträgt etwa 70 Gew-%, der Anteil an Stärke und/oder Protein etwa 3 bis 30 Gew-% und der Anteil an Kunststoff und/oder Gleitmittel etwa 1 bis 15 Gew-% als bevorzugte Zusammensetzung.

Zweckmäßig ist es, dass das Trägerrohr auf seiner Innenseite Oberflächenvorsprünge, insbesondere Rippen, Noppen oder Wülste aufweist, um den Messkopf besser fixieren zu können, der in einem Ende des Trägerrohrs befestigt ist.

Das Trägerrohr kann durch Strangpressverfahren hergestellt werden. Derartige Trägerrohre haben überraschenderweise eine gute Widerstandsfähigkeit gegenüber flüssigem Metall, sie halten der hohen Temperatur länger Stand als Papprohre, und sie bleiben nicht an einer Lanze anhaften, wie sie üblicherweise benutzt wird, um das Trägerrohr beim Eintauchen in die heiße Schmelze zu halten.

Nachfolgend wird ein Ausführungsbeispiel der Erfindung beschrieben.

Das erfindungsgemäße Trägerrohr in fachüblicher Grösse kann extrudiert werden aus einer Mischung aus etwa 70 Gew-% Holzspänen, etwa 27 Gew-% Malz als Bindemittel und einem Zusatz von Polypropylen und einem Gleitmittel in der Gesamtmenge von etwa 3 Gew-%. Als Gleitmittel können beispielsweise Standardgleitmittel für Polyolefine und PVC, wie Ethylen-Bis-Stearamide, Zinkstearate, Paraffinwachse, oder Fettsäure basierte Gleitmittel, wie Metallstearate, Amide oder Ester sowie Fluorelastomere verwendet werden. Die Innenseite des extrudierten Rohres ist mit Rippen versehen, so dass ein in dem Rohr zu haltender Messkopf in ein Rohrende hineingepresst und unter Druck zwischen sich gegenüberliegenden Rippen gehalten wird.

## Patentansprüche

1. Trägerrohr für Sensoren zur Messung in Metall- oder Kryolithschmelzen, insbesondere in Gusseisen-, Stahl- oder Kupferschmelzen, **dadurch gekennzeichnet, dass** es aus einer Mischung eines pflanzlichen Fasermaterials mit Stärke und/oder Protein gebildet ist.

2. Trägerrohr nach Anspruch 1, **dadurch gekennzeichnet, dass** das pflanzliche Fasermaterial auf Holz- und/oder Cellulosebasis gebildet ist.

3. Trägerrohr nach Anspruch 2, **dadurch gekennzeichnet, dass** das Holz als Späne oder Holzmehl vorliegt.

4. Trägerrohr nach einem der Ansprüche 1 bis 3, **dadurch gekennzeichnet, dass** es neben dem Fasermaterial und Stärke und/oder Protein auch Kunststoff und/oder Gleitmittel enthält.

5. Trägerrohr nach Anspruch 4, **dadurch gekennzeichnet, dass** der Anteil des Fasermaterials etwa 70 Gew-% beträgt.

6. Trägerrohr nach Anspruch 4, **dadurch gekennzeichnet, dass** der Anteil an Stärke und/oder Protein etwa 3 bis 30 Gew-% und der Anteil an Kunststoff und Gleitmittel etwa 1 bis 15 Gew-% beträgt.

7. Trägerrohr nach einem der Ansprüche 1 bis 6, **dadurch gekennzeichnet, dass** es auf seiner Innenseite Oberflächenvorsprünge, insbesondere Rippen, Noppen oder Wülste aufweist.

## Claims

1. Carrier tube for sensors for measurement in metal or cryolite melts, in particular in cast iron, steel or copper melts, **characterized in that** it is formed from a mixture of a vegetable fibre material with starch and/or protein.

2. Carrier tube according to Claim 1, **characterized in that** the vegetable fibre material is based on wood and/or cellulose.

3. Carrier tube according to Claim 2, **characterized in that** the wood is present in the form of chips or wood flour.

4. Carrier tube according to any of Claims 1 to 3, **characterized in that** it also contains plastic and/or lubricant in addition to the fibre material and starch and/or protein.

5. Carrier tube according to Claim 4, **characterized in that** the proportion of the fibre material is about 70% by weight.

6. Carrier tube according to Claim 4, **characterized in that** the proportion of starch and/or protein is about 3 to 30% by weight and the proportion of plastic and lubricant is about 1 to 15% by weight.

7. Carrier tube according to any of Claims 1 to 6, **characterized in that** it has surface projections, in particular ribs, knobs or beads, on its inside.

## Revendications

1. Tube de support pour capteurs pour des mesures dans des masses fondues de métal ou de cryolite, en particulier dans des masses fondues de fonte, d'acier ou de cuivre, **caractérisé en ce qu'**il est formé à partir d'un mélange d'une matière fibreuse végétale avec de l'amidon et/ou une protéine.

2. Tube de support selon la revendication 1, **caractérisé en ce que** la matière fibreuse végétale est formée à base de bois et/ou de cellulose.

3. Tube de support selon la revendication 2, **caractérisé en ce que** le bois est présent sous forme de copeaux ou de sciure de bois.

4. Tube de support selon l'une des revendications 1 à 3, **caractérisé en ce qu'**il contient, en plus de la matière fibreuse et de l'amidon et/ou d'une protéine, une matière plastique et/ou un lubrifiant.

5. Tube de support selon la revendication 4, **caractérisé en ce que** la proportion de matière fibreuse est d'environ 70 % en masse.

6. Tube de support selon la revendication 4, **caractérisé en ce que** la proportion d'amidon et/ou de protéine est d'environ 3 à 30 % en masse et la proportion de matière plastique et de lubrifiant est d'environ 1 à 15 % en masse.

7. Tube de support selon l'une des revendications 1 à 6, **caractérisé en ce qu'**il comporte sur son côté interne des protubérances de la surface, en particulier des nervures, des noppes ou des renflements.
